# EUROPÄISCHE PATENTSCHRIFT

(11) **EP 3 322 076 B1**
(45) Veröffentlichungstag und Bekanntmachung des Hinweises auf die Patenterteilung: **05.02.2020**
(21) Anmeldenummer: 16198690.6
(22) Anmeldetag: 14.11.2016
(51) Int. Cl.: H02M 7/04, H02M 7/06, H02M 3/156, H02M 1/00

(54) **SCHALTNETZTEIL MIT RESONANZWANDLER**
SWITCHING POWER SUPPLY WITH RESONANT CONVERTER
ALIMENTATION À DÉCOUPAGE COMPRENANT UN CONVERTISSEUR À RÉSONANCE

(43) Veröffentlichungstag der Anmeldung: 16.05.2018
(73) Patentinhaber: Siemens Aktiengesellschaft, 80333 München (DE)
(72) Erfinder: Schulz, Stefan, 2152 Gnadendorf (AT); Dyszewski, Janusz, 1200 Wien (AT); Reschenauer, Stefan, 2191 Atzelsdorf (AT)
(74) Vertreter: Maier, Daniel Oliver

(56) Entgegenhaltungen:
- US-A- 5 563 758
- US-A1- 2009 147 553
- US-A1- 2014 104 889

## Beschreibung

### Technisches Gebiet

Die gegenständliche Erfindung betrifft allgemein das Gebiet der Elektrotechnik, insbesondere den Bereich der Leistungselektronik und leistungselektronischer Schaltungen zur Stromversorgung. Im Speziellen bezieht sich die vorliegende Erfindung auf ein Schaltnetzteil oder Schaltnetzgerät, welches aus einer Gleichrichtereinheit für die Netzanbindung und zum Gleichrichten einer dreiphasigen Netz- bzw. Wechselspannung, sowie eine ersten Wandlerstufe besteht, wobei die erste Wandlerstufe eingangsseitig mit der Gleichrichtereinheit verbunden ist. Eine Ausgangsspannung der Gleichrichtereinheit bildet eine Eingangsspannung der ersten Wandlerstufe und eine Ausgangsspannung der ersten Wandlerstufe bildet eine Zwischenkreisspannung. Weiterhin umfasst das Schaltnetzteil eine zweite Wandlerstufe, welche als Resonanzwandler ausgeführt ist, dessen Eingangsspannung die Zwischenkreisspannung bildet.

### Stand der Technik

Schaltnetzteile, welche auch als Schaltgeräte bezeichnet werden, sind seit langem bekannt und werden heutzutage in vielen Bereichen eingesetzt, um eine Last bzw. einen Verbraucher an ein Stromnetz oder eine Stromquelle anzubinden und die jeweilige Last bzw. den jeweiligen Verbraucher mit einer meist konstanten und häufig vorgebbaren Spannung zu versorgen. Dazu wird vom Schaltnetzteil eine meist unstabilisierte Eingangsspannung - üblicherweise eine aus einer Stromquelle stammende Gleich- oder Wechselspannung - in eine konstante Ausgangsspannung umgewandelt, wobei eine Konstanz der Ausgangsspannung und/oder des Ausgangsstroms durch eine Steuerung des Energieflusses in das Schaltnetzteil und den angeschlossenen Verbraucher erreicht wird. Je nach Anwendung bzw. je nach Bedarf des jeweiligen Verbrauchers kann die Ausgangsspannung größer oder kleiner als die Eingangsspannung sein.

Schaltnetzteile sind in den verschiedensten Ausprägungen bekannt. Es kann beispielsweise für eine Anbindung an ein Wechselspannungsnetz oder eine Wechselspannungsquelle eine Gleichrichtung der Eingangsspannung bzw. der Wechselspannung im Schaltnetzteil durchgeführt werden. Für die Umwandlung der gleichgerichteten Eingangsspannung in eine konstante Ausgangsspannung werden üblicherweise Spannungswandler eingesetzt.

Anfänglich wurden so genannte hart schaltende Topologien wie z.B. Sperrwandler oder Flusswandler als Spannungswandler in Schaltnetzteilen eingesetzt. Ein Einsatz von diesen hart schaltenden Topologien weist den Nachteil von teils beträchtlichen Verlusten bei den Schaltvorgängen auf. Diese Verluste führen beispielsweise zu einem geringen Wirkungsgrad und können eine große Menge an Abwärme verursachen, welche vom Schaltnetzteil an die Umgebung abgegeben werden muss. Dadurch sind ein bestimmtes Volumen des Schaltnetzteils sowie Kühlmaßnahmen erforderlich, um ein Überhitzen zu vermeiden. Weiterhin wird durch die Schaltverluste beim Einsatz von z.B. Sperr- oder Flusswandlern verhindert, dass eine Schaltfrequenz beliebig erhöht werden kann. Dies führt zu Einschränkungen bei einer Größenreduktion des Schaltnetzteils, da beispielsweise die Bauform der Wickelgüter nicht beliebig reduzierbar ist. Schaltnetzteile, in welchen Sperr- oder Flusswandler zum Einsatz kommen, können daher aufgrund der Schaltverluste und der großen Bauform der Wickelgüter in der Größe nicht beliebig reduziert werden.

Daher werden seit einiger Zeit vermehrt so genannte "Soft-Switching"-Topologien wie z.B. Resonanzwandler für die Umwandlung der Eingangsspannung in eine konstante Ausgangsspannung in Schaltnetzteilen eingesetzt. Resonanzwandler stellen eine spezielle schaltungstechnische Form eines Gleichspannungswandlers dar, welcher zur Energieübertragung mit einem Schwingkreis arbeitet. Derartige "Soft-Switching"-Topologien wie z.B. Resonanzwandler haben gegenüber hart schaltenden Topologien bezüglich der elektromagnetischen Verträglichkeit und der Schaltverluste einen Vorteil. Bei "Soft-Switching"-Topologien wird sehr oft beispielsweise durch Schwingkreise ein Oszillieren von Energie erzwungen, um die Kapazitäten der Halbleiter und Wickelgüter verlustarm umzuladen. Dieses Oszillieren führt im System oft zu einem höheren Strom und damit zu zusätzlichen Flussverlusten. Die Reduktion der Schaltverluste ist jedoch deutlich größer als der Anstieg in den Leitverlusten, wodurch "Soft-Switching"-Topologien gegenüber hart schaltenden Topologien einen deutlichen Wirkungsgradvorteil bieten. Weiterhin werden in der aktuellen Halbleiterentwicklung größere Fortschritte bei einer Reduktion der Flussverluste als bei einer Reduktion der Schaltverluste erzielt.

Resonanzwandler weisen aufgrund ihrer frequenzabhängigen Komponenten (z.B. Kondensatoren, Spulen, Transformatoren, etc.) ein frequenzabhängiges Spannungsübersetzungsverhältnis zwischen Ausgangsspannung und Eingangsspannung auf. Dadurch kann durch Veränderung einer Schaltfrequenz ein Übersetzungsverhältnis eingestellt werden, welches einen Wert größer, kleiner oder gleich 1 aufweisen kann. Durch beispielsweise entsprechende Wahl der Windungszahlen des im Resonanzwandler eingesetzten Transformators kann dieses Übersetzungsverhältnis weiter angepasst werden. Dieses Übersetzungsverhältnis ist jedoch bis auf eine spezielle Schaltfrequenz lastabhängig. Da Resonanzwandler in der Regel aus zwei oder mehreren frequenzabhängigen Komponenten (z.B. Kondensatoren, Spulen, Transformatoren, etc.) bestehen, gibt es oft mehrere Resonanzfrequenzen, wobei meist nur bei einer bestimmten Resonanzfrequenz ein lastunabhängiges Übersetzungsverhältnis auftritt. Nur bei Betrieb mit exakt dieser Resonanzfrequenz weist der Resonanzwandler nahezu keine bzw. sehr geringe Schaltverluste und damit einen sehr hohen Wirkungsgrad auf. Wird der Wandler mit Schaltfrequenzen ober- oder unterhalb dieser Resonanzfrequenz getaktet, so stellt sich ein niedrigerer Wirkungsgrad ein, da bei gleicher Ausgangsspannung und Ausgangsleistung höhere Leit- bzw. Schaltverluste entstehen.

Bei einem Betrieb des Resonanzwandlers, bei welchem die Schaltfrequenz konstant gleich der Resonanzfrequenz - bei lastunabhängigem Übersetzungsverhältnis - gewählt wird, wird zwar der beste Wirkungsgrad erzielt, es können jedoch Schwankungen in der Eingangsspannung nicht ausgeregelt werden. Um sich in solchen Fällen das frequenzabhängige Spannungsübersetzungsverhältnis zu Nutze zu machen, um die Ausgangsspannung konstant zu halten, müssen die frequenzabhängigen Komponenten des Resonanzwandler so gewählt werden, damit der gesamte Eingangsspannungs-, Ausgangsspannungs- und Lastbereich abgedeckt werden kann. Ist hier ein großer Regelbereich gefordert, so erfordert dieser entsprechende Induktivitäts- bzw. Kapazitätswerte, welche dann auch beim Betrieb mit der Resonanzfrequenz, bei welcher sich ein lastunabhängiges Übersetzungsverhältnis einstellt, zu einem schlechteren Wirkungsgrad führen, als wenn nur ein sehr kleiner Regelbereich gefordert ist. Aus diesem Grund wird dem Resonanzwandler für einen großen Eingangsspannungsbereich üblicherweise eine zusätzliche Wandlerstufe vorgeschaltet, wodurch die Eingangsspannung des Resonanzwandlers, unabhängig von der Eingangsspannung des Schaltnetzteils, konstant gehalten wird. Dies ermöglicht eine entsprechende Dimensionierung des Resonanzwandlers für einen sehr kleinen Regelbereich, wodurch in Summe ein sehr hoher Wirkungsgrad erzielbar ist.

Beim Einsatz in einem Wechselspannungsnetz weisen Schaltnetzteile eingangsseitig eine Gleichrichtereinheit und einen Puffer- oder Zwischenkreiskondensator auf, um eine möglichst konstante Zwischenkreisspannung für einen nachgeschalteten Wandler zur Verfügung zu stellen. Durch die eingangsseitige Gleichrichtereinheit samt Pufferkondensator werden vom Schaltnetzteil am Eingang auch versorgungsseitig Oberschwingungen verursacht. Um diese Oberschwingungen möglichst gering zu halten, wurden durch internationale und/oder europäische Normen wie z.B. der IEC 61000-3-2 bzw. der EN 61000-3-2 einzuhaltende Grenzwerte hinsichtlich der Oberschwingungsströme vorgeschrieben. Zum Einhalten dieser Grenzwerte weisen Schaltnetzteile mittlerweile eine aktive oder passive Leistungsfaktorkorrektur oder Power Factor Correction (PFC) auf. Eine passive Lösung ist beispielsweise eine Oberwellendrossel, welche zwischen Gleichrichtereinheit und Pufferkondensator geschaltet wird. Dies erfordert allerdings ein weiteres, vergleichsweise großes Wickelgut, welches mit hohen Verlusten verbunden ist. Üblicherweise wird daher- speziell wenn sehr geringe Oberschwingungsströme gefordert sind - eine aktive Lösung eingesetzt. Dabei wird eine aktive Stufe direkt hinter die Gleichrichtereinheit geschaltet, welche eingangsseitig für geringe Oberschwingungen im Stromverlauf (z.B. sinusförmig, sinusähnlich, blockförmig, etc.) sorgt. Für die folgenden Stufen des Schaltnetzteils liefert diese aktive Stufe eine annähernd konstante Spannung mit entsprechendem Eingangsstrom, um die geforderten Grenzwerte für die Oberschwingungsströme zu erfüllen.

Ein Schaltnetzteil für einen Betrieb in einem Wechselspannungsnetz, in welchem für einen hohen Wirkungsgrad ein Resonanzwandler eingesetzt wird, welcher unabhängig von der Eingangsspannung immer mit Resonanzfrequenz, bei welcher sich ein lastunabhängiges Übersetzungsverhältnis einstellt, betrieben wird, und welches vorgegebenen Grenzwerte für Oberschwingungsströme einhält, weist damit üblicherweise eine dreistufige, meist komplizierte Bauweise auf. Üblicherweise ist ein derartiges dreistufiges Konzept - bestehend aus einer aktiven Leistungsfaktorkorrektur, einer Wandlerstufe zur Veränderung der Eingangsspannung des Resonanzwandlers und einem Resonanzwandler - mit einer hohen Komplexität sowie mit einem kostenintensiven, hohen Bauteileaufwand verbunden. Ein derartiges dreistufiges Konzept ist beispielsweise aus der Schrift US 2006/0193153 A1 bekannt. Die Schrift US 2009/147553 A1 offenbart ein Schaltnetzteil bestehend aus einem Gleichrichter, einem ersten Wandler zur Korrektur des Leistungsfaktors und einem Resonanzwandler, wobei die Eingangs- und die Ausgangsspannung des Resonanzwandlers in Abhängigkeit des Ausgangsstroms im selben Verhältnis angepasst werden, so dass der Resonanzwandler im optimalen Resonanzpunkt betrieben wird.

### Darstellung der Erfindung

Der Erfindung liegt daher die Aufgabe zugrunde, ein Schaltnetzteil mit einer einfachen, kostengünstigen und kompakten Bauform anzugeben, welches einen hohen Wirkungsgrad und einen Eingangsstrom mit geringem Oberwellengehalt aufweist.

Diese Aufgabe wird durch ein Schaltnetzteil der eingangs genannten Art gelöst, welches für einen Betrieb in einem dreiphasigen Wechselspannungsnetz einsetzbar ist und die Merkmalen des unabhängigen Patentanspruchs aufweist. Vorteilhafte Ausführungsformen der vorliegenden Erfindung sind in den abhängigen Ansprüchen beschrieben.

Erfindungsgemäß erfolgt die Lösung der Aufgabe durch ein Schaltnetzteil der eingangs erwähnten Art, welches für den Betrieb in einem dreiphasigen Wechselspannungsnetz eingerichtet ist. Dieses Schaltnetzteil besteht aus einer Gleichrichtereinheit zum Gleichrichten einer dreiphasigen Netzwechselspannung, einer ersten und einer zweiten Wandlerstufe. Die erste Wandlerstufe ist eingangsseitig mit der Gleichrichtereinheit verbunden. Eine Eingangsspannung der ersten Wandlerstufe wird von der Ausgangsspannung der Gleichrichtereinheit gebildet und die Ausgangsspannung der ersten Wandlerstufe bildet eine Zwischenkreisspannung, welche zumindest kleiner oder gleich, gegebenenfalls auch größer als die Ausgangsspannung der Gleichrichtereinheit sein kann. Die zweite Wandlerstufe ist als Resonanzwandler ausgeführt, dessen Eingangsspannung die Zwischenkreisspannung bildet. Diese Zwischenkreisspannung ist durch die erste Wandlerstufe bei einem Ausgangsstrom des Schaltnetzteils, welcher kleiner oder maximal gleich einem vorgebbaren Wert ist, derart geregelt, dass die Zwischenkreisspannung bzw. ein Mittelwert der Zwischenkreisspannung im Wesentlichen einer vorgebbaren Ausgangsspannung der zweiten Wandlerstufe bzw. des Resonanzwandlers multipliziert mit einem lastunabhängigen Übersetzungsverhältnis bei einem Betrieb der zweiten Wandlerstufe bzw. des Resonanzwandlers mit einer Resonanzfrequenz entspricht.

Bei erzwungener Absenkung der Ausgangsspannung der zweiten Wandlerstufe bzw. des Resonanzwandlers - zum Zweck einer Begrenzung des Ausgangsstroms auf einen vorgebbaren Wert - ist eine im Mittelwert ausreichend kleine Zwischenspannung derart einstellbar, dass die zweite Wandlerstufe bzw. der Resonanzwandler weiterhin im Wesentlichen mit der Resonanzfrequenz bei lastunabhängigem Übersetzungsverhältnis betrieben werden kann.

Der Hauptaspekt der erfindungsmäßig vorgeschlagenen Lösung besteht darin, dass das erfindungsgemäße Schaltnetzteil nur zwei Wandlerstufen bzw. nur einen Zwischenkreis umfasst. Damit werden die Komplexität der Schaltung sowie ein Bauteileaufwand und Kosten reduziert. Durch den Einsatz nur eines Zwischenkreises bzw. von zwei Wandlerstufen ist es möglich kompaktere Geräte zu bauen, welche trotzdem eine anwendungsspezifische Regelung der Ausgangsspannung über einen großen Eingangsspannungsbereich unter Einhaltung von Grenzwerten für Oberschwingungsströme bei Betrieb in einem Wechselspannungsnetz ermöglichen. Durch die erste Wandlerstufe, kann die Zwischenkreisspannung unabhängig von der Eingangsspannung des Schaltnetzteils und der Belastung am Ausgang des Schaltnetzteils so geregelt werden, dass die zweite Wandlerstufe stets in einem optimalen Betriebspunkt - idealerweise bei einer Resonanzfrequenz der zweiten Wandlerstufe bzw. des Resonanzwandlers bei einem lastunabhängigen Übersetzungsverhältnis mit einem sehr hohen Wirkungsgrad betrieben wird.

Selbst wenn z.B. bei Überlast oder Kurzschluss am Ausgang des Schaltnetzteils der Ausgangsstrom des Schaltnetzteils möglichst konstant auf einem vorgebbaren Wert gehalten werden muss, wird durch die erste Wandlerstufe im Mittelwert eine ausreichend kleine Zwischenkreisspannung eingestellt, sodass auch in diesem Betriebsfall die zweite Wandlerstufe im zuvor beschriebenen optimalen Betriebspunkt läuft. Der Resonanzwandler kann damit für einen sehr kleinen Regelbereich optimiert werden, da der gesamte Eingangsspannungs-, Ausgangsspannungs- und Lastbereich von der ersten Wandlerstufe ausgeregelt wird. Die Schaltvorgänge der zweiten Wandlerstufe erfolgen dadurch stets möglichst spannungsfrei und nahezu stromlos. Damit wird ein sehr hoher Wirkungsgrad erzielt. Weiterhin wird durch die zweistufige Bauweise des Schaltnetzteils eine weitere Verbesserung des Wirkungsgrads gegenüber drei- oder mehrstufigen Konzepten erzielt, da bei zwei Wandlerstufen weniger Verluste (z.B. Schaltverluste, Flussverluste) anfallen.

Bei lastbedingten, dynamischen Vorgängen am Ausgang des Schaltnetzteils wird vorteilhafterweise durch die zweite Wandlerstufe bzw. den Resonanzwandler eine Einhaltung der vorgebbaren Werte für Ausgangsspannung und/oder Ausgangsstrom sichergestellt. Zeitlich verzögert wird der Mittelwert der Zwischenkreisspannung durch die erste Wandlerstufe derart angepasst, dass die zweite Wandlerstufe bzw. der Resonanzwandler weiterhin bei der Resonanzfrequenz beim lastunabhängigen Übersetzungsverhältnis - also im optimalen Betriebspunkt - betreibbar ist. Das bedeutet, durch die zweite Wandlerstufe wird bei lastbedingten, dynamischen Vorgängen bzw. Abweichungen von Ausgangsspannung und/oder Ausgangsstrom am Ausgang des Schaltnetzteils von den vorgebbaren bzw. gewünschten Werten eine zeitlich rasche Anpassung vorgenommen. Die Anpassung der Zwischenkreisspannung durch erste Wandlerstufe für einen optimalen Betrieb der zweiten Wandlerstufe bzw. des Resonanzwandlers erfolgt zeitverzögert und langsamer. Damit kann einerseits rasch auf Veränderungen am Ausgang des Schaltnetzteils reagiert werden und weiterhin für einen optimalen Betrieb der zweiten Wandlerstufe bzw. des Resonanzwandlers gesorgt werden.

Es ist dabei von Vorteil, wenn die erste Wandlerstufe Tiefsteller-Funktionalität aufweist. Das bedeutet, dass die erste Wandlerstufe eine Funktionalität umfasst, durch welche die Eingangsspannung der ersten Wandlerstufe in eine Ausgangsspannung umsetzt, welche betragsmäßig kleiner als die Eingangsspannung ist. Damit kann insbesondere bei hohen netzseitigen Eingangsspannungen eine betragsmäßig hohe Zwischenkreisspannung als Eingangsspannung für die zweite Wandlerstufe bzw. den Resonanzwandler vermieden werden. Die erste Wandlerstufe kann daher beispielsweise als Tiefsetzsteller, Hoch-Tiefsetzsteller, Flusswandler, Cuk-Wandler, SEPIC-Wandler, etc. ausgeführt sein.

Das Signal für die Regelung der ersten Wandlerstufe ist vorteilhafterweise direkt aus der Ausgangsspannung der zweiten Wandlerstufe bzw. des Resonanzwandlers abgeleitet. Durch die Ableitung des Signals für die Regelung der ersten Wandlerstufe aus der Ausgangsspannung kann diese auf einen vorgebbaren Wert (z.B. einstellbar durch einen Anwender mittels Potentiometer) geregelt werden, wobei die Zwischenkreisspannung bzw. die Eingangsspannung des Resonanzwandlers entsprechend auf einen neuen Wert verändert wird.

Erfindungsgemäß wird dieses Signal aus einer Spannungs- und/oder Strominformation der zweiten Wandlerstufe bzw. des Resonanzwandlers direkt abgeleitet. Dabei können die Spannungs- und/oder Strominformation Auskunft über den Betriebspunkt der zweiten Wandlerstufe bzw. der Resonanzwandlers (z.B. überresonant, in Resonanz, unterresonant) geben. Es kann damit auf einfache Weise erkannt werden, ob die zweite Wandlerstufe bzw. der Resonanzwandler im optimalen Betriebspunkt läuft und bei einer Abweichung die Zwischenkreisspannung durch die erste Wandlerstufe entsprechend geregelt werden.

Die erste Wandlerstufe kann beispielsweise fixfrequent betrieben werden, wobei die Regelung idealerweise mittels Pulsweitenmodulation (PWM) erfolgt. Für die Regelung der ersten Wandlerstufe kann vorteilhafterweise eine Reglereinheit vorgesehen sein. Alternativ besteht die Möglichkeit, die erste Wandlerstufe auch mit einer variablen Frequenz zu betreiben, bei welcher der Strom in der ersten Wandlerstufe auf- und immer wieder bis auf null abgebaut wird, sodass die dabei auftretenden parasitären Schwingungen dafür ausgenutzt werden, um in der ersten Wandlerstufe eingesetzte Schalter in einem Spannungsminimum zu einschalten. Diese Technik ist auch als "Valley-switching"-Technologie bzw. "Quasi-Resonantes"-Schalten bekannt. Durch diese Technologie können die in der ersten Wandlerstufe eingesetzten Schalter wie z.B. MOSFETs, IGBTs, Bipolartransistoren, etc. in einem verlustarmen Schaltbetrieb arbeiten.

Idealerweise ist die zweite Wandlerstufe bzw. der Resonanzwandler als so genannter LLC-Wandler ausgeführt. Resonanzwandler können in Abhängigkeit von der Anwendung als LLC-(bzw. LCL-) oder LCC-Konverter ausgeführt sein und gewährleisten eine geringe Verlustleistung und einen guten Wirkungsgrad. Bei resonantem Betrieb - d.h. einem Betrieb bei der Resonanzfrequenz mit lastunabhängigem Übersetzungsverhältnis - erzeugen Resonanzwandler - insbesondere in der LLC-Ausführungsform - sehr wenige Störsignale.

Eine zweckmäßige Weiterbildung des erfindungsgemäßen Schaltnetzteils sieht vor, dass der Zwischenkreis zwischen der ersten Wandlerstufe und der zweiten Wandlerstufe bzw. dem Resonanzwandler ein Pufferkondensator aufweist. Der Pufferkondensator ist an eine Ausgangsseite der ersten Wandlerstufe angeschaltet bzw. an eine Eingangsseite der zweiten Wandlerstufe bzw. des Resonanzwandler. Es liegt an ihm die Eingangsspannung für die zweite Wandlerstufe bzw. den Resonanzwandler an. Der Pufferkondensator hat üblicherweise die Aufgabe, eine sehr kurzfristige Unterbrechung in Spannungsversorgung zu überbrücken und damit die Eingangsspannung für die zweite Wandlerstufe konstant zu halten.

Bei vielen Anwendungen von Schaltnetzteilen in einem dreiphasigen Netz ist ein Einsatz des Schaltnetzteils auch bei einem Ausfall einer oder aller Phasen des dreiphasigen Wechselspannungsnetzes z.B. bis zur Behebung dieses Ausfalls gefordert, um beispielsweise unterbrechungsfrei Anlagenteile in Fabriken weiterhin mit Energie zu versorgen. Bei einem Ausfall einer Phase gibt es allerdings Zeitbereiche bei Spannungsnulldurchgängen der Eingangsspannung, in welchen keine Energie aus dem Versorgungsnetz entnommen werden kann, wodurch die Ausgangsspannung der ersten Wandlerstufe bzw. die Spannung am Pufferkondensator, je nach Ausgangsleistung und Kapazität des Kondensators, genau in jenen Zeitbereichen nicht von der ersten Wandlerstufe des erfindungsgemäßen Schaltnetzteils konstant gehalten werden kann. Die Ausgangsspannung der ersten Wandlerstufe bzw. die Spannung am Pufferkondensator sinkt daher immer wieder kurzzeitig ab. Daher wird in diesem Fall vorgesehen, dass bei Abfall der Zwischenkreisspannung - sofern dieser Abfall nicht durch den Pufferkondensator abgefangen werden kann - eine Regelung der Ausgangsspannung durch die zweite Wandlerstufe bzw. des Resonanzwandlers erfolgt.

Ein Resonanzwandler weist aufgrund seiner frequenzabhängigen Komponenten (z.B. Kondensatoren, Spulen, Transformator, etc.) ein frequenzabhängiges Spannungsübersetzungsverhältnis zwischen Ausgangsspannung und Eingangsspannung (= Zwischenkreisspannung des erfindungsgemäßen Schaltnetzteils) auf. Dadurch kann gegebenenfalls durch Veränderung der Schaltfrequenz ein Übersetzungsverhältnis eingestellt werden, welches einen Wert kleiner, gleich oder größer als 1 aufweisen kann. Diese Eigenschaft des Resonanzwandlers kann beim Ausfall von zumindest einer Phase der dreiphasigen Wechselspannung dazu genutzt werden, in jenen Zeitbereichen, in welchen die Spannung am Pufferkondensator - d.h. die Zwischenkreisspannung - am Eingang des Resonanzwandlers absinkt (d.h. bei Nulldurchgängen der Netzspannung), durch eine Regelung eine Frequenzänderung durchzuführen und damit das Übersetzungsverhältnis zu verändern. Auf diese Weise kann trotz des Ausfalls einer Phase bis zur Behebung der Störung eine geregelte Ausgangsspannung sichergestellt werden. Während der Zeit des Phasenausfalls erreicht der Resonanzwandler allerdings nicht mehr seinen maximalen Wirkungsgrad wie bei Vorhandensein aller drei Phasen, da die zweite Wandlerstufe bzw. der Resonanzwandler immer wieder kurzzeitig über- oder unterresonant betrieben werden muss. D.h. der Resonanzwandler wird ober- oder unterhalb der Resonanzfrequenz bei lastunabhängigem Übersetzungsverhältnis betrieben. Sind alle Phasen des Wechselspannungsnetzes wieder verfügbar, so wird die Regelung der zweiten Wandlerstufe bzw. des Resonanzwandlers beendet - die Regelung der Ausgangsspannung erfolgt dann wieder im Wesentlichen über die Regelung der Zwischenkreisspannung durch die erste Wandlerstufe. Für die Regelung der zweiten Wandlerstufe bzw. des Resonanzwandlers - während des Ausfalls zumindest einer Phase - ist idealerweise ein weiteres Signal aus der Ausgangsspannung der zweiten Wandlerstufe bzw. des Resonanzwandlers ableitbar. Die entsprechende Regelung kann von der Reglereinheit, durch welche die erste Wandlerstufe geregelt wird, oder von einer eigenen Reglereinheit übernommen werden.

In einer weiteren Ausprägung des Schaltnetzteils ist es möglich bei einem Ausfall einer Phase des dreiphasigen Wechselspannungsnetzes durch die erste Wandlerstufe in jenen Zeitbereichen, in denen Energie aus dem Versorgungsnetz entnommen wird, eine höhere Zwischenkreisspannung einzustellen. Diese höhere Zwischenkreisspannung wird in weiterer Folge durch Frequenzvariation des Resonanzwandlers ausgeregelt, wobei dieser je nach Zwischenkreisspannung über- oder unterresonant (d.h. ober- oder unterhalb der Resonanzfrequenz bei lastunabhängigem Übersetzungsverhältnis) betrieben wird. Hierdurch ist eine Optimierung des Gesamtwirkungsgrades oder eine Verschiebung der zusätzlichen Verluste im zweiphasigen Betrieb zwischen den einzelnen Wandlerstufen möglich, damit ein übermäßiges Überhitzen einzelner Komponenten vermieden wird.

Eine alternative, vorteilhafte Ausführungsvariante des Schaltnetzteils sieht vor, dass eine Zusatzstufe vorgesehen ist, welche eingangsseitig mit dem Pufferkondensator am Ausgang der ersten Wandlerstufe verbunden ist, und ausgangsseitig an die zweite Wandlerstufe bzw. den Resonanzwandler geschaltet ist. Diese Zusatzstufe ist bei einem zweiphasigen Betrieb - d.h. beispielsweise bei Ausfall einer Phase des dreiphasigen Wechselspannungsnetzes - aktivierbar. Die Aktivierung der Zusatzstufe bei einem Phasenausfall sorgt dafür, dass der Resonanzwandler weiterhin im Wesentlichen im optimalen Betriebspunkt - d.h. mit seiner Resonanzfrequenz bei lastunabhängigem Übersetzungsverhältnis - betrieben werden kann. Durch die Zusatzstufe wird ein Spannungsübersetzungsverhältnis von Ausgangsspannung (= Eingangsspannung des Resonanzwandlers) zu Eingangsspannung (= Zwischenkreisspannung am Pufferkondensator) mit einem Wert größer als 1 eingestellt. Der Mittelwert der Eingangsspannung des Resonanzwandlers wird damit im Wesentlichen auf einem für die vorgegebene bzw. gewünschte Ausgangsspannung notwendigen konstanten Wert gehalten.

Die Zusatzstufe ist bei einem normalen Betrieb bzw. bei einer dreiphasigen Eingangsspannung des Schaltnetzteils weggeschaltet. Die Zusatzstufe wird erst in jenen Zeitbereichen aktiviert, wenn ein Abfall der Zwischenkreisspannung, ein Abfall der Spannung am Pufferkondensator am Ausgang der erste Wandlerstufe, ein Abfall der Ausgangsspannung der Schaltnetzteils und/oder ein Abfall einer Phasenspannung am Eingang des Schaltnetzteils festgestellt wird - wie beispielsweise beim Ausfall einer Phase bei Nulldurchgängen der Netzspannung am Eingang des Schaltnetzteils. Für die Aktivierung der Zusatzstufe ist idealerweise ein aktiver Schalter einsetzbar, welcher nur bei einem Abfall der Zwischenkreisspannung getaktet wird. Dazu ist der aktive Schalter mit einer Einschaltzeit und/oder Frequenz ansteuerbar, durch welche der Mittelwert der Eingangsspannung der zweiten Wandlerstufe bzw. des Resonanzwandlers weitgehend konstant gehalten wird. Für eine weitere Optimierung kann vorgesehen sein, dass durch eine entsprechende Regelung des aktiven Schalters eine Schaltfrequenz des aktiven Schalters in vorteilhafter Weise derart eingestellt wird, dass der aktive Schalter in einem Spannungsminimum eingeschaltet wird. Dadurch werden mögliche zusätzliche Schaltverluste gering gehalten. Bei einem normalen Betrieb mit dreiphasiger Netzspannung ist der aktive Schalter permanent ausgeschaltet und liefert keine Schaltverluste.

Weiterhin ist es günstig, wenn die Zusatzstufe im normalen Betrieb mit einer dreiphasigen Netzspannung durch ein Schaltelement, insbesondere eine Bypass-Diode, überbrückbar ist.

Ein Strom im Zwischenkreis wird damit an der Zusatzstufe vorbeigeführt. Auf diese einfache Weise werden Flussverluste durch die Zusatzstufe im normalen Betrieb des Schaltnetzteils reduziert bzw. verhindert. Eine weitere Optimierungsmaßnahme für den normalen, dreiphasigen Betrieb könnte vorsehen, dass die Bypass-Diode z.B. durch einen aktiven Schalter oder ein Relais kurzgeschlossen wird, um die Flussverluste auf ein Minimum zu reduzieren.

Die Zusatzstufe ist idealerweise als Hochsetzsteller ausgeführt. Durch einen Hochsetzsteller kann auf einfache Weise der Abfall der Zwischenkreisspannung ausgeglichen werden, da bei einem Hochsetzsteller üblicherweise die Ausgangsspannung stets größer als die Eingangsspannung ist. Damit kann der Mittelwert der Eingangsspannung für den Resonanzwandler im Wesentlichen auf einem für die gewünschte Ausgangsspannung konstanten Wert gehalten werden.

Durch eine Regelung der zweiten Wandlerstufe bzw. des Resonanzwandler oder durch ein Zuschalten der Zusatzstufe bei einem Abfall der Zwischenkreisspannung, vor allem bei Ausfall einer Phase des dreiphasigen Wechselspannungsnetzes, kann beispielsweise eine Pufferzeit bei einem kompletten Netzausfall erhöht werden. D.h. die Ausgangsspannung des Schaltnetzteils bzw. der zweiten Wandlerstufe kann nach einem Netzausfall für eine längere Zeit aufrecht gehalten werden. Damit kommt es für eine längere Zeitdauer bei Netzausfällen bzw. Netzunterbrechungen zu keinen Auswirkungen auf die Ausgangsspannung des Schaltnetzteils. Dies wird beispielsweise dadurch erreicht, dass der Pufferkondensator im Zwischenkreis entweder durch den Resonanzwandler selbst mittels Frequenzänderung (bei Regelung des Resonanzwandlers) oder durch die Zusatzstufe weiter entladen wird und damit mehr Energie aus dem Pufferkondensator entnommen werden kann, um die Ausgangsspannung des Schaltnetzteils weiterhin aufrecht zu halten.

Alternativ kann bei Ausfall einer Phase des dreiphasigen Wechselspannungsnetzes ein Pufferkondensator zwischen der Gleichrichtereinheit und der ersten Wandlerstufe mittels einer Steuereinheit zugeschaltet werden. Durch eine Zuschaltung eines Pufferkondensators zwischen der Gleichrichtereinheit und der ersten Wandlerstufe können jene Zeitbereiche bei Nulldurchgängen der Eingangsspannung überbrückt werden, in welchen keine Energie aus dem Wechselspannungsnetz entnommen werden kann. Hierdurch ist eine Regelung der zweiten Wandlerstufe bzw. des Resonanzwandlers oder ein Aktvieren einer Zusatzstufe zwischen erster und zweiter Wandlerstufe zum Konstanthalten der Ausgangsspannung nicht erforderlich. Die Zuschaltung des Pufferkondensators sollte so erfolgen, dass Spitzenwerte im Eingangsstrom nicht überschritten werden, um das Versorgungsnetz nicht übermäßig zu beanspruchen und gegebenenfalls eine vorgeschaltete Sicherung nicht zum Auslösen zu bringen.

### Kurzbeschreibung der Zeichnung

Die Erfindung wird nachfolgend in beispielhafter Weise anhand der beigefügten Figuren erläutert. Es zeigen dabei:
- Figur 1: einen schematischen Aufbau des erfindungsgemäßen Schaltnetzteils mit zwei Wandlerstufen
- Figur 2a: eine schematische Aufbauvariante des erfindungsgemäßen Schaltnetzteils für einen zweiphasigen Betrieb
- Figur 2b: eine schematische Aufbauvariante der erfindungsgemäßen Schaltnetzteils für einen zweiphasigen Betrieb mit getrennten Reglereinheiten
- Figur 3: eine schematische Aufbauvariante des erfindungsgemäßen Schaltnetzteils mit einer für einen zweiphasigen Betrieb aktivierbaren Zusatzstufe
- Figur 4: eine schematische Aufbauvariante des erfindungsgemäßen Schaltnetzteils mit einem zuschaltbaren Pufferkondensator für einen zweiphasigen Betrieb

### Ausführung der Erfindung

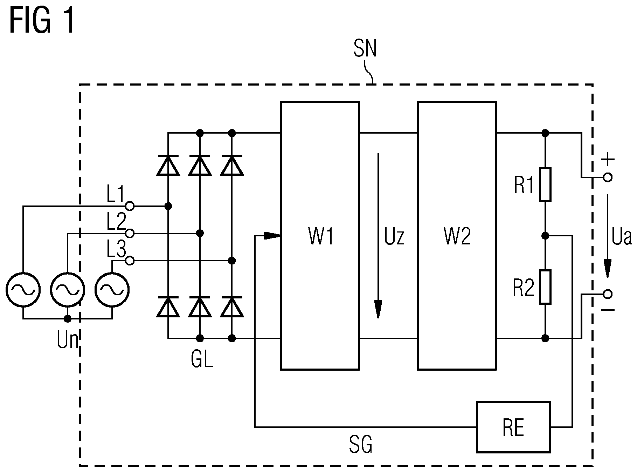

Figur 1 zeigt schematisch einen Aufbau eines erfindungsgemäßen Schaltnetzteil SN. Das Schaltnetzteil SN ist an eine dreiphasige Netzspannung Un bzw. an eine Wechselspannungsquelle Un mit drei Phasen L1, L2, L3 angebunden. Die Netzspannung Un bildet die Eingangsspannung für die Gleichrichtereinheit GL des Schaltnetzteils SN. Durch die Gleichrichtereinheit GL, welche beispielsweise als 6-pulsiger Gleichrichter ausgeführt ist, wird die Netzspannung Un gleichgerichtet.

Weiterhin umfasst das Schaltnetzteil SN eine erste Wandlerstufe W1, durch welche ein Spannungsübersetzungsverhältnis zumindest kleiner oder gleich 1, wahlweise auch größer als 1, eingestellt werden kann. Die erste Wandlerstufe W1 weist eine Tiefsetzsteller-Funktionalität auf. D.h. die erste Wandlerstufe kann beispielsweise als Abwärtswandler bzw. Tiefsetzsteller ausgeführt sein oder es wird ein Wandler wie z.B. Hoch-Tiefsetzsteller, Flusswandler, Cuk-Wandler, SEPIC-Wandler, etc. eingesetzt, welcher eine Tiefsetzsteller-Funktion aufweist. Die erste Wandlerstufe W1 ist eingangsseitig mit der Gleichrichtereinheit GL verbunden. Die Ausgangsspannung der Gleichrichtereinheit GL - im Prinzip die gleichgerichtete Netzspannung Un - bildet die Eingangsspannung der ersten Wandlerstufe W1. Von der Ausgangsspannung der ersten Wandlerstufe W1 wird eine Zwischenkreisspannung Uz gebildet.

Das Schaltnetzteil SN umfasst weiterhin eine zweite Wandlerstufe W2, die eingangsseitig mit der ersten Wandlerstufe W1 verbunden ist. Die zweite Wandlerstufe W2 ist als Resonanzwandler, insbesondere als so genannter LLC-Wandler, ausgeführt. Die Zwischenkreisspannung Uz bzw. die Ausgangsspannung der ersten Wandlerstufe W1 bildet die Eingangsspannung der zweiten Wandlerstufe W2 bzw. des Resonanzwandlers W2.

Aus der Ausgangsspannung Ua kann entweder direkt oder mit Hilfe eines Spannungsteilers R1, R2 ein Feedback-Signal für eine Reglereinheit RE abgeleitet werden. Von der Reglereinheit RE können aus dem Feedback-Signal eine oder mehrere Stellgrößen SG generiert werden, welche an die erste Wandlerstufe W1 geführt werden.

Erfindungsgemäß wird das Feedback-Signal aus einer Spannungs- und/oder Strominformation des zweiten Wandlers W2 abgeleitet. Dazu ist die Reglereinheit RE in zwei Unterreglereinheiten aufgeteilt. Eine erste Unterreglereinheit liefert dabei zumindest eine Stellgröße für die Regelung der zweiten Wandlerstufe W2 bzw. des Resonanzwandlers und eine zweiten Unterreglereinheit zumindest eine Stellgröße für die Regelung der ersten Wandlerstufe W1.

Das Feedback-Signal wird eingesetzt, um die Ausgangsspannung Ua auf einen vorgebbaren Wert zu regeln. Durch die erste Wandlerstufe W1 ist die Zwischenkreisspannung Uz und damit die Eingangsspannung der zweiten Wandlerstufe W2 bzw. des Resonanzwandlers W2 derart regelbar, dass ein Mittelwert der Zwischenkreisspannung Uz im Wesentlichen der vorgebbaren Ausgangsspannung Ua des Resonanzwandlers W2 multipliziert mit einem lastunabhängigen Übersetzungsverhältnis bei einem Betrieb des Resonanzwandler W2 mit einer Resonanzfrequenz entspricht. D.h. um den vorgebbaren bzw. gewünschten Wert der Ausgangsspannung Ua des Resonanzwandlers W2 zu erreichen, wird durch die erste Wandlerstufe W1 - geregelt durch die Reglereinheit RE - die Zwischenkreisspannung Uz derart verändert, dass die zweite Wandlerstufe W2 bzw. der Resonanzwandler W2 im Wesentlichen im optimalen Betriebspunkt - bei der Resonanzfrequenz bei lastunabhängigem Übersetzungsverhältnis - betrieben wird.

Für die Regelung der ersten Wandlerstufe W1 kann beispielsweise eine Pulsweitenmodulation eingesetzt werden. Am Eingang der ersten Wandlerstufe W1 stellt sich bei konstanter Leistung am Ausgang des Schaltnetzteils SN automatisch ein Strom ein, bei welchem einem Gleichstromanteil nur ein sehr geringer Wechselstromanteil überlagert ist. Dieser Strom fließt durch die Gleichrichtereinheit GL beispielsweise bei einer dreiphasigen Netzspannung Un abwechselnd für 120° durch eine andere Zuleitung hin bzw. zurück. Das Spektrum des Eingangsstroms weist damit nur einen geringen Oberwellenanteil auf, wodurch beispielsweise durch Normen wie z.B. die EN61000-3-2 vorgegebene Grenzwerte für Oberschwingungsströme auf einfache Weise eingehalten werden.

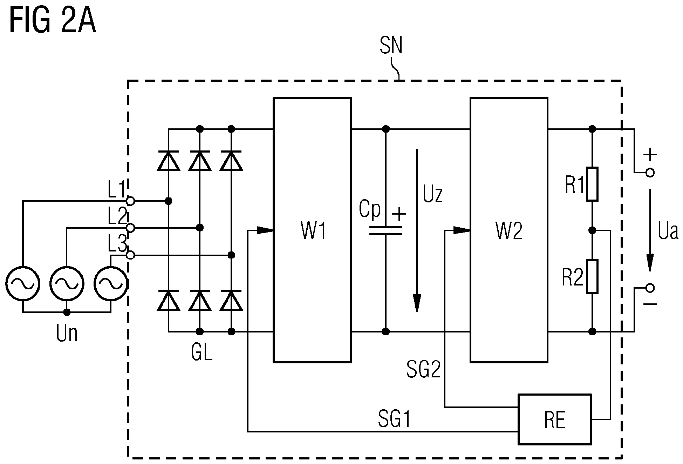

Die Figur 2a zeigt wieder beispielhaft in schematischer Weise das erfindungsgemäße Schaltnetzteil SN bestehend aus der Gleichrichtereinheit GL, der ersten Wandlerstufe W1 und der zweiten, als Resonanzwandler ausgeführten Wandlerstufe W2. Aus der Ausgangsspannung Ua der zweiten Wandlerstufe W2 bzw. des Resonanzwandlers W2 kann entweder direkt oder mit Hilfe des Spannungsteilers R1, R2 ein Feedback-Signal für die Reglereinheit RE abgeleitet werden, wobei zwei oder mehrere Stellgrößen SG1, SG2 an die beiden Wandlerstufe W1 und W2 geführt werden.

Weiterhin weist die beispielhafte Aufbauvariante für das Schaltnetzteil SN gemäß Figur 2a einen Pufferkondensator Cp auf. Der Pufferkondensator Cp ist zwischen die erste Wandlerstufe W1 und den Resonanzwandler W2 eingefügt. D.h. der Zwischenkreis zwischen den beiden Wandlerstufen W1, W2 weist nun den Pufferkondensator Cp auf, an welchem die Zwischenkreisspannung Uz als Eingangsspannung für den Resonanzwandler W2 anliegt. Durch den Pufferkondensator Cp können beispielsweise sehr kurzfristige Unterbrechungen in der Strom- und/oder Spannungsversorgung überbrückt und die Zwischenkreisspannung Uz konstant gehalten werden. Dies kommt insbesondere beim Ausfall einer Phase L1, L2, L3 der dreiphasigen Wechselspannungsversorgung Un zum Tragen.

Für einen Einsatz des Schaltnetzteils SN bei Ausfall einer Phase L1, L2, L3 des Versorgungsnetzes Un erfolgt weiterhin eine Regelung der zweiten Wandlerstufe W2 bzw. des Resonanzwandlers W2 durch die Reglereinheit RE. Diese Regelung erfolgt in jenen Zeitbereichen, in welchen keine Energie aus dem Versorgungsnetz Un entnommen werden kann, wie z.B. bei Spannungsnulldurchgängen der Eingangsspannung, wodurch die Ausgangsspannung der ersten Wandlerstufe W1 bzw. die Spannung am Pufferkondensator Cp, je nach Ausgangsleitung und Kapazität des Kondensators Cp, nicht von der ersten Wandlerstufe W1 konstant gehalten werden kann, und daher immer wieder kurzzeitig absinkt. Von der ersten Wandlerstufe W1 kann dann die Ausgangsspannung Ua des Resonanzwandlers W2 nicht mehr auf dem vorgegebenen Wert der Ausgangsspannung Ua gehalten werden. Es wird daher bei Abfall der Zwischenkreisspannung Uz bzw. bei Abfall der Spannung am Pufferkondensator Cp die Regelung für den Resonanzwandler W2 aktiviert. Über die Reglereinheit RE wird für diese Zeitbereiche eine Veränderung der Schaltfrequenz des Resonanzwandlers W2 durchgeführt. Dadurch kann das Übersetzungsverhältnis von Ausgangsspannung Ua zu Eingangsspannung des Resonanzwandlers W2 (= Zwischenkreisspannung Uz) verändert werden und gegebenfalls - zeitlich begrenzt für den Phasenausfall - je nach Bedarf auf einen Wert kleiner, gleich oder größer als 1 eingestellt werden. Es kann damit eine geregelte Ausgangsspannung Ua sichergestellt werden.

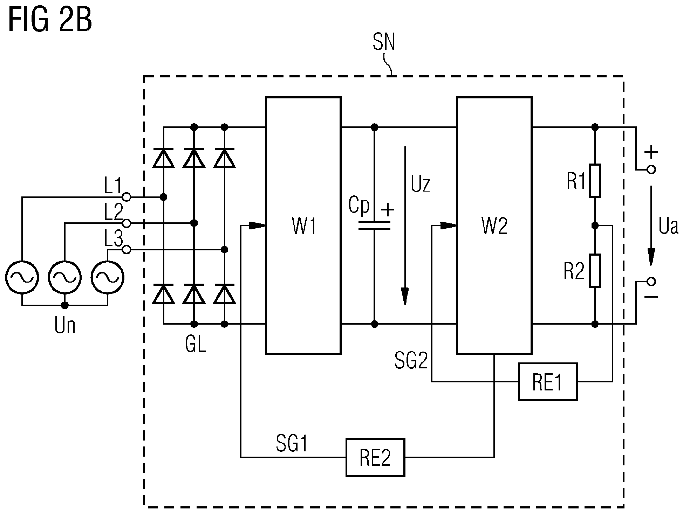

Figur 2b zeigt schematisch und beispielhaft eine Ausführungsvariante des erfindungsgemäßen Schaltnetzteils SN gemäß Figur 2a. Dabei ist die Reglereinheit in zwei Unterreglereinheiten RE1, RE2 aufgeteilt, wobei von der ersten Unterreglereinheit RE1 die zumindest eine Stellgröße SG2 für die Regelung der zweiten Wandlerstufe W2 bzw. des Resonanzwandlers und von der zweiten Unterreglereinheit RE2 die zumindest eine Stellgröße SG1 für die Regelung der ersten Wandlerstufe W1 geliefert wird. Das Signal für die Regelung der ersten Wandlerstufe W1 wird erfindungsgemäß aus Spannungs- bzw. Strominformationen direkt aus dem Resonanzwandler W2 abgeleitet, wobei die Spannungs- bzw. Strominformationen Aufschluss über den Betriebspunkt des Resonanzwandlers W2 (überresonant / in Resonanz / unterresonant) geben. Die erste Unterreglereinheit RE1 regelt dabei die Ausgangsspannung Ua des Schaltnetzteils SN durch Frequenzvariation der zweiten Wandlerstufe W2 bzw. des Resonanzwandlers. Dadurch kann die zweite Wandlerstufe W2 je nach Zwischenkreisspannung Uz überresonant, in Resonanz oder unterresonant arbeiten. Mit der zweiten Unterreglereinheit RE2 wird in weiterer Folge die Zwischenkreisspannung Uz so lange angepasst, bis die Wandlerstufe W2 bzw. der Resonanzwandler im Wesentlichen in Resonanz, d.h. mit der Resonanzfrequenz bei lastunabhängigem Übersetzungsverhältnis und damit mit optimalem Wirkungsgrad betreibbar ist.

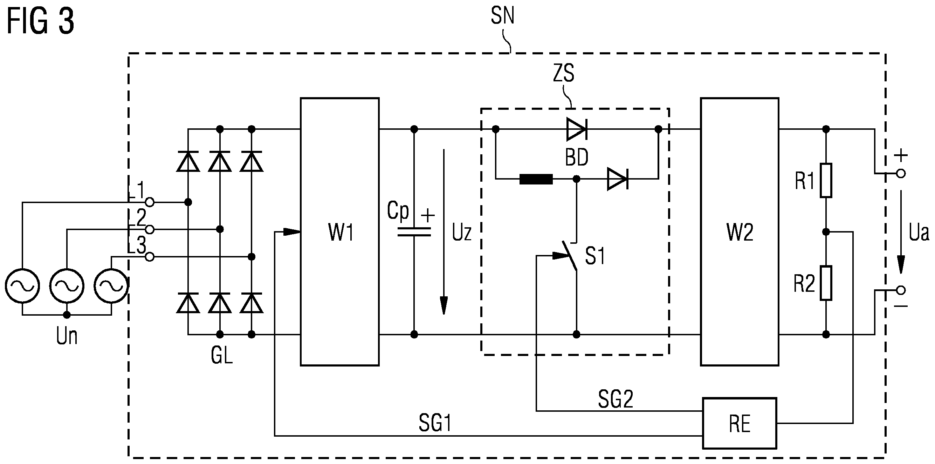

Figur 3 zeigt schematisch und beispielhaft eine weitere, vorteilhafte Ausführungsform des erfindungsgemäßen Schaltnetzteils SN, welche beispielsweise bei Ausfall einer Phase L1, L2, L3 der dreiphasigen Wechselspannungsversorgung Un für einen störungsfreien Betrieb von z.B. Anlagen sorgen kann. Diese Ausführungsform des Schaltnetzteils SN sieht vor, dass eine Zusatzstufe ZS bei Ausfall einer Phase L1, L2, L3 zuschaltbar ist. Die Zusatzstufe ZS ist eingangsseitig mit dem Pufferkondensator Cp am Ausgang der ersten Wandlerstufe W1 verbunden. Die Zwischenkreisspannung Uz bildet damit die Eingangsspannung für die Zusatzstufe ZS, wenn die Zusatzstufe ZS aktiviert ist. Ausgangsseitig ist die Zusatzstufe ZS mit der zweiten Wandlerstufe W2 bzw. dem Resonanzwandler W2 verbunden. Bei aktivierter Zusatzstufe ZS bildet damit die Ausgangsspannung der Zusatzstufe ZS die Eingangsspannung für den Resonanzwandler W2.

Die Zusatzstufe ZS ist bei normalem dreiphasigem Betrieb weggeschaltet und ist dabei durch ein Schaltelement wie z.B. eine Bypass-Diode BD überbrückt, durch welche ein Strom im Zwischenkreis an der Zusatzstufe ZS vorbeigeführt wird. Zur Optimierung bzw. zur Minimierung von Flussverlusten könnte im normalen dreiphasigen Betrieb die Bypass-Diode BD beispielsweise durch einen aktiven Schalter oder ein Relais kurzgeschlossen werden.

Bei einem Ausfall einer Phase L1, L2, L3 der Versorgungsspannung Un ist die Zusatzstufe ZS aktivierbar. Die Aktivierung wird durch einen Abfall der Zwischenkreisspannung Uz bzw. der Spannung am Pufferkondensator Cp, durch einen ungewollten Abfall der Ausgangsspannung Ua oder durch eine direkte Messung der Phasenspannungen ausgelöst. Die Zusatzstufe ZS bzw. ein aktiver Schalter S1 zum Zuschalten der Zusatzstufe ZS wird über die Stellgröße SG2 für jene Zeitbereiche von der Reglereinheit RE automatisch mit einer vorgegebenen Frequenz und einem Tastverhältnis angesteuert, in welchen die Zwischenkreisspannung Uz absinkt bzw. keine Energieversorgung aufgrund eines Phasenausfalls durch die Eingangsspannung des Schaltnetzteils SN zur Verfügung steht, um die Eingangsspannung der Wandlerstufe W2 bzw. des Resonanzwandlers, und damit in weiterer Folge die Ausgangsspannung Ua, konstant zu halten. Die vorgegebene Frequenz kann bei quasiresonanter bzw. resonanter Ansteuerung in einer besonderen Ausführung von der Reglereinheit RE nachgeführt werden, dass der aktive Schalter S1 stets in einem Spannungsminimum eingeschaltet werden kann.

Die Zusatzstufe ZS kann - wie in Figur 3 beispielhaft dargestellt - als Hochsetzsteller ausgeführt sein. Durch die Zusatzstufe ZS wird die zweite Wandlerstufe W2 bzw. der Resonanzwandler W2 auch im Fall eines Phasenausfalls weiterhin im optimalen Betriebspunkt - d.h. bei seiner Resonanzfrequenz bei lastunabhängigem Übersetzungsverhältnis - betrieben.

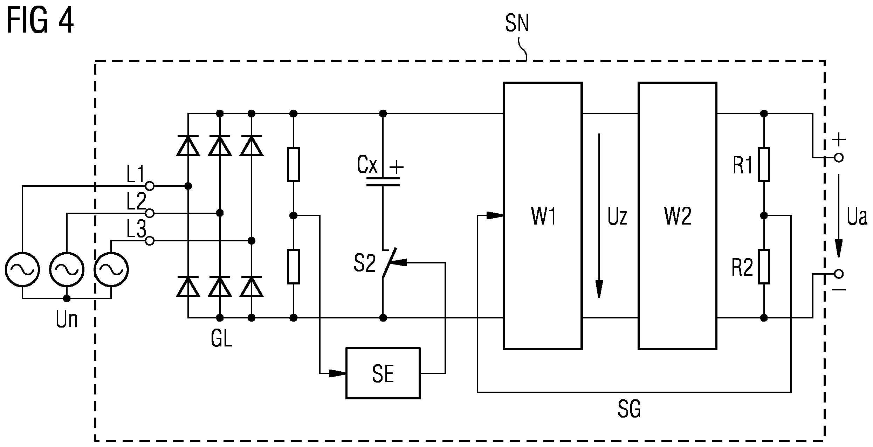

Figur 4 zeigt schematisch eine weitere, beispielhafte Ausführungsvariante für einen Betrieb des Schaltnetzteils SN bei Ausfall einer Phase L1, L2, L3 der dreiphasigen Versorgungsspannung Un. Dabei ist beim Ausfall einer Phase L1, L2, L3 ein Pufferkondensator Cx zwischen die Gleichrichtereinheit GL und die erste Wandlerstufe W1 zuschaltbar. Durch eine Zuschaltung eines Pufferkondensators Cx zwischen der Gleichrichtereinheit GL und der ersten Wandlerstufe W1 können jene Zeitbereichen bei Nulldurchgängen der Eingangsspannung überbrückt werden, in welchen keine Energie aus dem Wechselspannungsnetz Un entnommen werden kann.

Für die Zuschaltung des Pufferkondensators Cx ist eine Steuereinheit SE vorgesehen, durch welche ein Schalter S2 ansteuerbar ist. Mit dem Schalter S2 kann in Abhängigkeit von einer Ausgangsspannung der Gleichrichtereinheit GL, aus welcher beispielsweise mittels eines Spannungsteilers eine Signal für die Steuereinheit SE ableitbar ist, der Pufferkondensator Cx bei Bedarf zugeschaltet werden. Bei dieser Ausführungsvariante gemäß Figur 4 ist allerdings zu berücksichtigen, dass die Zuschaltung des Pufferkondensators Cx derart erfolgen sollte, dass das Versorgungsnetz Un nicht übermäßig beansprucht und eine gegebenenfalls vorgeschaltete Sicherung nicht zum Auslösen gebracht wird.

## Patentansprüche

1. Schaltnetzteil (SN) bestehend aus:
einer Gleichrichtereinheit (GL) für eine Netzanbindung, einer ersten Wandlerstufe (W1), deren Eingangsspannung eine Ausgangsspannung der Gleichrichtereinheit (GL) und deren Ausgangsspannung eine Zwischenkreisspannung (Uz) bilden, und einer zweiten Wandlerstufe (W2), welche als Resonanzwandler ausgeführt ist und dessen Eingangsspannung die Zwischenkreisspannung (Uz) bildet, wobei die erste Wandlerstufe (W1) derart ausgestaltet ist:
- dass bei einem Ausgangsstrom des Schaltnetzteils (SN), welcher kleiner oder maximal gleich einem vorgebbaren Wert ist, die Zwischenkreisspannung (Uz) derart geregelt wird, dass ein Mittelwert der Zwischenkreisspannung (Uz) einer vorgebbaren Ausgangsspannung (Ua) der zweiten Wandlerstufe (W2) multipliziert mit einem lastunabhängigen Übersetzungsverhältnis bei einem Betrieb der zweiten Wandlerstufe (W2) mit einer Resonanzfrequenz entspricht und dass die zweite Wandlerstufe (W2) mit der Resonanzfrequenz bei lastunabhängigem Übersetzungsverhältnis betrieben wird, und
- dass ein Signal (SG, SG1) für eine Regelung der ersten Wandlerstufe (W1) aus einer Spannungs- und/oder Strominformation der zweiten Wandlerstufe (W2) abgeleitet wird,
**dadurch gekennzeichnet, dass**
die Gleichrichtereinheit (GL) zum Gleichrichten einer dreiphasigen Wechselspannung (Un) eingerichtet ist
und dass die erste Wandlerstufe (W1) dazu eingerichtet ist, bei Absenkung der vorgebbaren Ausgangsspannung (Ua) der zweiten Wandlerstufe (W2) zur Begrenzung des Ausgangsstroms des Schaltnetzteils (SN) auf einen vorgebbaren Wert, die Zwischenkreisspannung (UZ) derart zu regeln, dass die zweite Wandlerstufe (W2) weiterhin mit der Resonanzfrequenz bei dem lastunabhängigen Übersetzungsverhältnis betrieben wird.

2. Schaltnetzteil nach Anspruch 1, ***dadurch gekennzeichnet, dass*** bei lastbedingten, dynamischen Vorgängen ausgangsseitig am Schaltnetzteil (SN) durch die zweite Wandlerstufe (W2) eine Einhaltung der vorgebbaren Werte für Ausgangsspannung und/oder Ausgangsstrom sicherstellbar ist, und dass durch die erste Wandlerstufe (W1) der Mittelwert der Zwischenkreisspannung (Uz) mit einer Zeitverzögerung derart anpassbar ist, dass die zweite Wandlerstufe (W2) weiterhin bei der Resonanzfrequenz bei lastunabhängigem Übersetzungsverhältnis betreibbar ist.

3. Schaltnetzteil nach einem der Ansprüche 1 bis 2, ***dadurch gekennzeichnet, dass*** die erste Wandlerstufe (W1) Tiefsetzsteller-Funktionalität aufweist.

4. Schaltnetzteil nach einem der Ansprüche 1 bis 3, ***dadurch gekennzeichnet, dass*** für die Regelung der ersten Wandlerstufe (W1) eine Reglereinheit (RE, RE2) vorgesehen ist.

5. Schaltnetzteil nach einem der Ansprüche 1 bis 4, ***dadurch gekennzeichnet, dass*** die Regelung der ersten Wandlerstufe (W1) mittels Pulsweitenmodulation erfolgt.

6. Schaltnetzteil nach einem der Ansprüche 1 bis 4, ***dadurch gekennzeichnet, dass*** die Regelung der ersten Wandlerstufe (W1) eine Schaltfrequenz von in der ersten Wandlerstufe (W1) eingesetzten Schaltern derart nachführt, dass die in der ersten Wandlerstufe (W1) eingesetzten Schaltern in einem Spannungsminimum eingeschaltet werden.

7. Schaltnetzteil nach einem der Ansprüche 1 bis 6, ***dadurch gekennzeichnet, dass*** die zweite Wandlerstufe (W2) als LLC-Wandler ausgeführt ist.

8. Schaltnetzteil nach einem der Ansprüche 1 bis 7, ***dadurch gekennzeichnet, dass*** der Zwischenkreis zwischen der ersten Wandlerstufe (W1) und der zweiten Wandlerstufe (W2) einen Pufferkondensator (Cp) aufweist.

9. Schaltnetzteil nach Anspruch 8, ***dadurch gekennzeichnet, dass*** bei Abfall der Zwischenkreisspannung (Uz), insbesondere bei Ausfall einer oder aller Phasen der dreiphasigen Wechselspannung (Un), eine Veränderung des Übersetzungsverhältnisses der zweiten Wandlerstufe (W2) derart erfolgt, dass die Ausgangsspannung (Ua) des Schaltnetzteils (SN) auf dem vorgebbaren Wert gehalten wird.

10. Schaltnetzteil nach Anspruch 9, ***dadurch gekennzeichnet, dass*** für eine Regelung der zweiten Wandlerstufe (W2) ein weiteres Signal (SG2) aus der Ausgangsspannung (Ua) der zweiten Wandlerstufe (W2) ableitbar ist.

11. Schaltnetzteil nach Anspruch 8, ***dadurch gekennzeichnet, dass*** weiterhin eine Zusatzstufe (ZS) vorgesehen ist, welche eingangsseitig mit dem Pufferkondensator (Cp) am Ausgang der ersten Wandlerstufe (W1) und ausgangsseitig mit der zweiten Wandlerstufe (W2) verbunden ist, und welche beim Ausfall einer oder aller Phasen der dreiphasigen Wechselspannung aktivierbar ist.

12. Schaltnetzteil nach Anspruch 11, ***dadurch gekennzeichnet, dass*** die Zusatzstufe (ZS) durch einen Abfall der Zwischenkreisspannung (Uz), durch einen Abfalls einer Spannung (Uz) am Pufferkondensator am Ausgang der ersten Wandlerstufe (W1), durch einen Abfall der Ausgangsspannung (Ua) des Schaltnetzteils und/oder durch einen Abfall einer Phasenspannung eingangsseitig am Schaltnetzteil (SN) aktivierbar ist.

13. Schaltnetzteil nach einem der Ansprüche 11 bis 12, ***dadurch gekennzeichnet, dass*** für die Aktivierung der Zusatzstufe (ZS) ein aktiver Schalter (S1) verwendbar ist, welcher mit einer Einschaltzeit und/oder mit einer Frequenz derart ansteuerbar ist, dass der Mittelwert einer Eingangsspannung der zweiten Wandlerstufe (W2) weitgehend konstant gehalten wird.

14. Schaltnetzteil nach Anspruch 13, ***dadurch gekennzeichnet, dass*** durch eine Regelung eine Schaltfrequenz des aktiven Schalters (S1) derart einstellbar ist, dass der aktive Schalter (S1) in einem Spannungsminimum eingeschaltet wird.

15. Schaltnetzteil nach einem der Ansprüche 11 bis 14, ***dadurch gekennzeichnet, dass*** die Zusatzstufe (ZS) in einem Normalbetrieb der dreiphasigen Wechselspannung (Un) durch ein Schaltelement (BD), insbesondere eine Bypass-Diode, überbrückbar ist.

16. Schaltnetzteil nach einem der Ansprüche 11 bis 15, ***dadurch gekennzeichnet, dass*** die Zusatzstufe (ZS) als Hochsetzsteller ausgeführt ist.

17. Schaltnetzteil nach einem der Ansprüche 1 bis 7, ***dadurch gekennzeichnet, dass*** bei Ausfall zumindest einer Phase der dreiphasigen Wechselspannung (Un) ein Pufferkondensator (Cx) mittels einer Steuerungseinheit (SE) zwischen die Gleichrichtereinheit (GL) und die erste Wandlerstufe (W1) zuschaltbar ist.

## Claims

1. Switching power supply (SN) consisting of:
a rectifier unit (GL) for a mains connection, a first converter stage (W1), the input voltage of which forms an output voltage of the rectifier unit (GL) and the output voltage of which forms an intermediate circuit voltage (Uz), and a second converter stage (W2), which is designed as a resonant converter and the input voltage of which forms the intermediate circuit voltage (Uz), wherein the first converter stage (W1) is embodied such that:
- for an output current of the switching power supply (SN) which is less than or no more than equal to a predeterminable value, the intermediate circuit voltage (Uz) is regulated in such a manner that an average of the intermediate circuit voltage (Uz) corresponds to a predeterminable output voltage (Ua) of the second converter stage (W2) multiplied by a load-independent transformation ratio while operating the second converter stage (W2) with a resonant frequency and that the second converter stage (W2) is operated with the resonant frequency for the load-independent transformation ratio, and that
- a signal (SG, SG1) for regulating the first converter stage (W1) is derived from voltage and/or current information of the second converter stage (W2),
**characterised in that**
the rectifier unit (GL) is set up for rectifying a three-phase AC voltage (Un)
and that the first converter stage (W1) is set up, with the forced reduction of the predeterminable output voltage (Ua) of the second converter stage (W2), to limit the output current of the switching power supply (SN) to a predeterminable value, to regulate the intermediate circuit voltage (UZ) in such a way that the second converter stage (W2) continues to be operated with the resonant frequency for the load-independent transformation ratio.

2. Switching power supply according to claim 1, ***characterised in that*** in the event of load-related dynamic processes on the output side of the switching power supply (SN), the second converter stage (W2) can ensure compliance with the predeterminable values for output voltage and/or output current, and that the first converter stage (W1) can adapt the average value of the intermediate circuit voltage (Uz) to a time delay by in such a way that the second converter stage (W2) can continue to be operated at the resonance frequency in the case of a load-independent transmission ratio.

3. Switching power supply according to one of claims 1 to 2, ***characterised in that*** the first converter stage (W1) has buck converter functionality.

4. Switching power supply according to one of claims 1 to 3, ***characterised in that*** a regulator unit (RE, RE2) is provided for the regulation of the first converter stage (W1).

5. Switching power supply according to one of claims 1 to 4, ***characterised in that*** the first converter stage (W1) is regulated by means of pulse width modulation.

6. Switching power supply according to one of claims 1 to 4, ***characterised in that*** the regulation of the first converter stage (W1) tracks a switching frequency of switches used in the first converter stage (W1) in such a manner that the switches used in the first converter stage (W1) are switched on at a voltage minimum.

7. Switching power supply according to one of claims 1 to 6, ***characterised in that*** the second converter stage (W2) is designed as an LLC converter.

8. Switching power supply according to one of claims 1 to 7, ***characterised in that*** the intermediate circuit between the first converter stage (W1) and the second converter stage (W2) has a buffer capacitor (Cp).

9. Switching power supply according to claim 8, ***characterised in that*** in the event of a drop in the intermediate circuit voltage (Uz), in particular in the event of the failure of one or all of the phases of the three-phase AC voltage (Un), the transformation ratio of the second converter stage (W2) changes in such a manner that the output voltage (Ua) of the switching power supply (SN) is kept at the predeterminable value.

10. Switching power supply according to claim 9, ***characterised in that*** for regulation of the second converter stage (W2), a further signal (SG2) can be derived from the output voltage (Ua) of the second converter stage (W2).

11. Switching power supply according to claim 8, ***characterised in that*** an additional stage (ZS) is provided, which is connected on the input side to the buffer capacitor (Cp) at the output of the first converter stage (W1) and on the output side to the second converter stage (W2), and which can be activated in the event of failure of one or all phases of the three-phase AC voltage.

12. Switching power supply according to claim 11, ***characterised in that*** the additional stage (ZS) can be activated by a drop in the intermediate circuit voltage (Uz), by a drop in a voltage (Uz) on the buffer capacitor at the output of the first converter stage (W1), by a drop in the output voltage (Ua) of the switching power supply and/or by a drop in a phase voltage on the input side on the switching power supply (SN).

13. Switching power supply according to one of claims 11 to 12, ***characterised in that*** for the activation of the additional stage (ZS) an active switch (S1) can be used which can be controlled with a switch-on time and/or at a frequency in such a manner that the average value of an input voltage of the second converter stage (W2) is kept largely constant.

14. Switching power supply according to claim 13, ***characterised in that*** by means of a regulation, a switching frequency of the active switch (S1) can be set in such a way that the active switch (S1) is switched on at a voltage minimum.

15. Switching power supply according to one of claims 11 to 14, ***characterised in that*** in normal operation of the three-phase AC voltage (Un), the additional stage (ZS) can be bridged by a switching element (BD), in particular, a bypass diode.

16. Switching power supply according to one of claims 11 to 15, ***characterised in that*** the additional stage (ZS) is designed as a boost converter.

17. Switching power supply according to one of claims 1 to 7, ***characterised in that*** in the event of failure of at least one phase of the three-phase AC voltage (Un), a buffer capacitor (Cx) can be connected by means of a control unit (SE) between the rectifier unit (GL) and the first converter stage (W1).

## Revendications

1. Alimentation à découpage (SN) composée :
d'une unité de redresseur (GL) pour un branchement réseau, d'un premier étage de convertisseur (W1) dont la tension d'entrée forme une tension de sortie de l'unité de redresseur (GL) et dont la tension de sortie forme une tension de circuit intermédiaire (Uz), et d'un deuxième étage de convertisseur (W2) qui est conçu en tant qu'un convertisseur à résonance et dont la tension d'entrée forme la tension de circuit intermédiaire (Uz),
dans lequel
le premier étage de convertisseur (W1) est ainsi conçu que :
- pour un courant de sortie de l'alimentation à découpage (SN) qui est inférieur ou au maximum égal à une valeur pouvant être prédéfinie,
la tension de circuit intermédiaire (Uz) est ainsi régulée qu'une valeur médiane de la tension de circuit intermédiaire (Uz) correspond à une tension de sortie (Ua) pouvant être prédéfinie du deuxième étage de convertisseur (W2) multipliée par un rapport de translation indépendant de la charge pour un fonctionnement du deuxième étage de convertisseur (W2) avec une fréquence de résonance, et que le deuxième étage de convertisseur (W2) avec la fréquence de résonance est exploité avec un rapport de translation indépendant de la charge,
et
- qu'un signal (SG, SG1) pour une régulation du premier étage de convertisseur (W1) est dérivé d'une information de tension et/ou de courant du deuxième étage de convertisseur (W2),
**caractérisée en ce que**
l'unité de redresseur (GL) est conçue pour redresser une tension alternative triphasée (Un)
et que le premier étage de convertisseur (W1) est conçu, en cas de baisse de la tension de sortie (Ua) pouvant être prédéfinie du deuxième étage de convertisseur (W2) afin de délimiter le courant de sortie de l'alimentation à découpage (SN) à une valeur pouvant être prédéfinie, pour réguler la tension de circuit intermédiaire (Uz) de telle sorte que le deuxième étage de convertisseur (W2) continue d'être exploité à la fréquence de résonance dans le rapport de translation indépendant de la charge.

2. Alimentation à découpage selon la revendication 1, **caractérisée en ce qu'**en cas d'opérations dynamiques dues à la charge, le respect des valeurs pouvant être prédéfinies pour la tension de sortie et/ou le courant de sortie peut être garanti en sortie sur l'alimentation à découpage (SN) par le deuxième étage de convertisseur (W2), et que la valeur médiane de la tension de circuit intermédiaire (Uz) peut être adaptée avec un retard temporel par le premier étage de convertisseur (W1) de telle sorte que le deuxième étage de convertisseur (W2) peut continuer d'être exploité à la fréquence de résonance dans le rapport de translation indépendant de la charge.

3. Alimentation à découpage selon l'une des revendications 1 à 2, **caractérisée en ce que** le premier étage de convertisseur (W1) présente une fonctionnalité de convertisseur abaisseur.

4. Alimentation à découpage selon l'une des revendications 1 à 3, **caractérisée en ce que** pour la régulation du premier étage de convertisseur (W1), une unité de régulation (RE, RE2) est prévue.

5. Alimentation à découpage selon l'une des revendications 1 à 4, **caractérisée en ce que** la régulation du premier étage de convertisseur (W1) est effectuée par modulation d'impulsions en largeur.

6. Alimentation à découpage selon l'une des revendications 1 à 4, **caractérisée en ce que** la régulation du premier étage de convertisseur (W1) asservit une fréquence de commutation de commutateurs employés dans le premier étage de convertisseur (W1) de telle sorte que les commutateurs employés dans le premier étage de convertisseur (W1) sont commutés dans un minimum de tension.

7. Alimentation à découpage selon l'une des revendications 1 à 6, **caractérisée en ce que** le deuxième étage de convertisseur (W2) est conçu en tant que convertisseur LLC.

8. Alimentation à découpage selon l'une des revendications 1 à 7, **caractérisée en ce que** le circuit intermédiaire présente un condensateur tampon (Cp) entre le premier étage de convertisseur (W1) et le deuxième étage de convertisseur (W2).

9. Alimentation à découpage selon la revendication 8, **caractérisée en ce qu'**en cas de défaillance de la tension de circuit intermédiaire (Uz), en particulier en cas de défaillance d'une ou de toutes les phases de la tension alternative triphasée (Un), une modification du rapport de translation du deuxième étage de convertisseur (W2) est effectuée de telle sorte que la tension de sortie (Ua) de l'alimentation à découpage (SN) est maintenue à la valeur pouvant être prédéfinie.

10. Alimentation à découpage selon la revendication 9, **caractérisée en ce que** pour une régulation du deuxième étage de convertisseur (W2), un autre signal (SG2) peut être dérivé de la tension de sortie (Ua) du deuxième étage de convertisseur (W2).

11. Alimentation à découpage selon la revendication 8, **caractérisée en ce qu'**en outre, un étage supplémentaire (ZS) est prévu, lequel est relié côté entrée avec le condensateur tampon (Cp) à la sortie du premier étage de convertisseur (W1) et côté sortie avec le deuxième étage de convertisseur (W2), et lequel peut être activé en cas de défaillance d'une ou de toutes les phases de la tension alternative triphasée.

12. Alimentation à découpage selon la revendication 11, **caractérisée en ce que** l'étage supplémentaire (ZS) peut être activé par une défaillance de la tension de circuit intermédiaire (Uz), par une défaillance d'une tension (Uz) au condensateur tampon en sortie du premier étage de convertisseur (W1), par une défaillance de la tension de sortie (Ua) de l'alimentation à découpage et/ou par une défaillance d'une tension de phase côté entrée sur l'alimentation à découpage (SN).

13. Alimentation à découpage selon l'une des revendications 11 à 12, **caractérisée en ce que** pour l'activation de l'étage supplémentaire (ZS), un commutateur actif (S1) peut être employé, lequel peut être commandé avec un temps de commutation et/ou une fréquence de telle sorte que la valeur médiane d'une tension d'entrée du deuxième étage de convertisseur (W2) est maintenue constante dans une large mesure.

14. Alimentation à découpage selon la revendication 13, **caractérisée en ce qu'**une fréquence de commutation du commutateur actif (S1) peut être réglée de telle sorte par une régulation que le commutateur actif (S1) est commuté dans un minimum de tension.

15. Alimentation à découpage selon l'une des revendications 11 à 14, **caractérisée en ce que** l'étage supplémentaire (ZS) peut être court-circuité par un élément de commutation (BD), en particulier une diode de dérivation lorsque la tension alternative triphasée (Un) fonctionne normalement.

16. Alimentation à découpage selon l'une des revendications 11 à 15, **caractérisée en ce que** l'étage supplémentaire (ZS) est conçu en tant que convertisseur élévateur.

17. Alimentation à découpage selon l'une des revendications 1 à 7, **caractérisée en ce qu'**en cas de défaillance d'au moins une phase de la tension alternative triphasée (Un), un condensateur tampon (Cx) peut être commuté au moyen d'une unité de commande (SE) entre l'unité de redresseur (GL) et le premier étage de convertisseur (W1).
